# EUROPEAN PATENT APPLICATION

(11) **EP 4 682 969 A1**
(43) Date of publication of application: **21.01.2026**
(21) Application number: 25188155.3
(22) Date of filing: 08.07.2025
(51) Int. Cl.: H01M 4/13, H01M 4/36, H01M 4/38, H01M 4/587

(54) **NEGATIVE ELECTRODE FOR LITHIUM SECONDARY BATTERY, LITHIUM SECONDARY BATTERY CONTAINING THE SAME AND METHOD FOR MANUFACTURING THE LITHIUM SECONDARY BATTERY**

(30) Priority: 10.07.2024 KR 20240090865
(71) Applicant: SAMSUNG SDI CO., LTD., Yongin-si, Gyeonggi-do 17084 (KR)
(72) Inventor: KIM, SooChan, 17084 Gyeonggi-do (KR); AN, HOYONG, 17084 Gyeonggi-do (KR); HONG, Minyoung, 17084 Gyeonggi-do (KR); KIM, Minjun, 17084 Gyeonggi-do (KR)
(74) Representative: Michalski Hüttermann & Partner Patentanwälte mbB

(57) **Abstract**

Disclosed are a negative electrode for a lithium secondary battery, a lithium secondary battery including the same, and a method for manufacturing the lithium secondary battery. A negative electrode active includes a negative electrode current collector and a negative electrode active material layer on the negative electrode current collector, the negative electrode active material layer has a long axis in a first direction, the negative electrode active material layer includes first negative electrode active material layers spaced apart from each other in a second direction that crosses the first direction and a second negative electrode active material layer between respective ones of the first negative electrode active material layers, and a ratio of a specific capacity of the first negative electrode active material layer to a specific capacity of the second negative electrode active material layer is 0.75 to 0.95.

## Description

### CROSS-REFERENCE TO RELATED APPLICATION

The present application claims priority to and the benefit of Korean Patent Application No. 10-2024-0090865, filed on July 10, 2024, in the Korean Intellectual Property Office, the entire content of which is hereby incorporated by reference.

### BACKGROUND

Embodiments of the present disclosure herein relate to a negative electrode for a lithium secondary battery, a lithium secondary battery including the same and a method for manufacturing the lithium secondary battery.

Recently, with the rapid spread of electronic devices that use batteries, such as mobile phones, laptop computers, and electric vehicles, the interest in secondary batteries having high energy density and high capacity is rapidly increasing. Accordingly, research and development to improve the performance of lithium secondary batteries is being actively conducted.

A lithium secondary battery may be a battery including a positive electrode and a negative electrode, containing active materials capable of intercalation and deintercalation of lithium ions, and an electrolyte, and produces electrical energy through the oxidation and reduction reactions if (e.g., when) lithium ions are intercalated into and deintercalated from the positive electrode and negative electrode.

### SUMMARY

Embodiments of the present disclosure provide a negative electrode for a lithium secondary battery, capable of minimizing or reducing a non-wetted area by including negative electrode active material layers having different densities from each other.

Embodiments of the present disclosure provide a lithium secondary battery including the negative electrode.

According to an embodiment of the present disclosure, a negative electrode for a lithium secondary battery includes a negative electrode current collector and a negative electrode active material layer on the negative electrode current collector, where the negative electrode active material layer has a long axis in a first direction. The negative electrode active material layer includes first negative electrode active material layers spaced apart from each other in a second direction that crosses the first direction, and a second negative electrode active material layer between respective ones of the first negative electrode active material layers. A ratio of a specific capacity of the first negative electrode active material layer to a specific capacity of the second negative electrode active material layer is about 0.75 to about 0.95.

According to another embodiment of the present disclosure, a lithium secondary battery includes a positive electrode including a current collector and a positive electrode active material layer on the current collector, a negative electrode including a negative electrode current collector and a negative electrode active material layer on the negative electrode current collector, where the negative electrode active material layer has a long axis in a first direction, and a separator between the positive electrode and the negative electrode. The negative electrode active material layer includes first negative electrode active material layers spaced apart from each other in a second direction that crosses the first direction, and a second negative electrode active material layer between respective ones of the first negative electrode active material layers. A ratio of a specific capacity of the second negative electrode active material layer is greater than a specific capacity of the first negative electrode active material layer, and a ratio of a width of the second negative electrode active material layer in the second direction to a width of the negative electrode current collector in the second direction is about 5% to about 20%.

According to another embodiment of the present disclosure, a method for manufacturing a lithium secondary battery includes preparing a first negative electrode active material slurry and a second negative electrode active material slurry, and applying the first negative electrode active material slurry and the second negative electrode active material slurry side by side along a first direction onto a negative electrode current collector to form a first negative electrode active material layer and a second negative electrode active material layer, respectively. A ratio of a specific capacity of the first negative electrode active material layer to a specific capacity of the second negative electrode active material layer is about 0.75 to about 0.95.

### BRIEF DESCRIPTION OF THE DRAWINGS

The accompanying drawings are included to provide a further understanding of the subject matter of the present disclosure, and are incorporated in and constitute a part of this specification. The drawings illustrate embodiments of the present disclosure and, together with the description, serve to explain principles of the present disclosure.
FIG. 1 is a simplified conceptual diagram showing a lithium secondary battery according to some embodiments of the present disclosure.
FIGS. 2-5 are simplified diagrams showing lithium secondary batteries according to some embodiments, where FIG. 2 is a cylindrical battery, FIG. 3 is a prismatic battery, and FIGS. 4-5 are pouch-type batteries.
FIG. 6A is a plan view of a negative electrode for a lithium secondary battery according to some embodiments of the present disclosure.
FIG. 6B is a cross-sectional view of a negative electrode for a lithium secondary battery according to some embodiments of the present disclosure.
FIG. 7 is an enlarged view of a negative electrode active material layer according to area M in FIG. 6A.
FIG. 8 is a diagram illustrating a method for manufacturing a lithium secondary battery according to an embodiment of the present disclosure.
FIG. 9 is a diagram illustrating a method for manufacturing a lithium secondary battery according to an embodiment of the present disclosure, and is a cross-sectional view along line A-A' of FIG. 8.

### DETAILED DESCRIPTION

In order to sufficiently understand the configuration and effect of the subject matter of the present disclosure, some embodiments of the present disclosure will be described with reference to the accompanying drawings. It should be noted, however, that the present disclosure is not limited to the following embodiments, and may be implemented in various suitable forms. Through the description of the embodiments herein, the disclosure of the subject matter of the present disclosure is made to be complete, and the embodiments are provided to let those skilled in the art fully know the scope of the present disclosure.

In the description, it will be understood that, if (e.g., when) an element is referred to as being on another element, the element can be directly on the other element or intervening elements may be present between therebetween. In the drawings, thicknesses of some components may be exaggerated to effectively illustrate the technical contents of the present disclosure. Like reference numerals refer to like elements throughout the specification.

The embodiments described in the description will be described with reference to cross-sectional and/or plan views, which may be idealized example embodiments of the present disclosure. In the drawings, the thicknesses of films and regions may be exaggerated to effectively explain the technical contents of the present disclosure. Accordingly, the regions illustrated in the drawings may be schematic in nature, and the shapes of the regions illustrated in the drawings are intended to illustrate example forms of regions of a device and are not intended to limit the scope of the disclosure. Although terms such as first, second, third, or the like have been used in various embodiments in the description to describe various components, these components should not be limited by these terms. These terms are only used to distinguish one component from another. The embodiments described and illustrated herein also include complementary embodiments thereof.

The terminology used herein is for the purpose of describing embodiments and is not intended to limit the disclosure. In this description, the singular form includes the plural form unless specifically stated otherwise. The terms "includes," "comprises," "including," and/or 'comprising' as used in the description do not exclude the presence or addition of one or more other components.

As used herein, the term "combination thereof" may refer to a mixture, a stack, a composite, a copolymer, an alloy, a blend, or a reaction product.

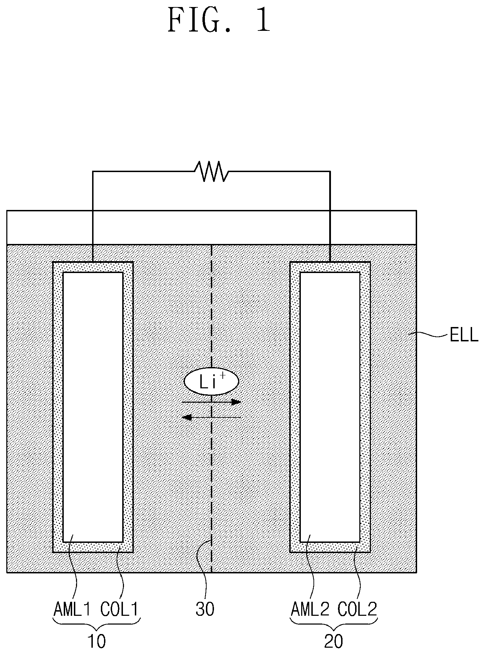

FIG. 1 is a simplified conceptual diagram of a lithium secondary battery according to some embodiments of the present disclosure. Referring to FIG. 1, a lithium secondary battery may include a positive electrode 10, a negative electrode 20, a separator 30, and an electrolyte solution ELL.

The positive electrode 10 and the negative electrode 20 may be spaced apart from each other by the separator 30. The separator 30 may be between the positive electrode 10 and the negative electrode 20. The positive electrode 10, the negative electrode 20 and the separator 30 may be in contact with the electrolyte solution ELL. The positive electrode 10, the negative electrode 20 and the separator 30 may be immersed in the electrolyte solution ELL.

The electrolyte solution ELL may be a medium that transmits lithium ions between the positive electrode 10 and the negative electrode 20. In the electrolyte solution ELL, the lithium ions may move through the separator 30 toward the positive electrode 10 or the negative electrode 20.

### Positive Electrode 10

The positive electrode 10 for a lithium secondary battery may include a current collector COL1 and a positive electrode active material layer AML1 on the current collector COL1. The positive electrode active material layer AML1 may include a positive electrode active material and may further include a binder and/or a conductive material (e.g., an electrically conductive material).

In an embodiment, the positive electrode 10 may further include an additive that may serve as a sacrificial positive electrode.

The content of the positive electrode active material in the positive electrode active material layer AML1 may range from about 90 wt% to about 99.5 wt% on the basis of about 100 wt% of the positive electrode active material layer AML1. The contents of the binder and the conductive material may be about 0.5 wt% to about 5 wt%, respectively, on the basis of about 100 wt% of the positive electrode active material layer AML1.

The binder may serve to improve attachment of positive electrode active material particles to each other and also to improve attachment of the positive electrode active material to the current collector COL1. An example of the binder may include polyvinyl alcohol, carboxymethyl cellulose, hydroxypropyl cellulose, diacetyl cellulose, polyvinyl chloride, carboxylated polyvinyl chloride, polyvinyl fluoride, ethylene oxide-containing polymer, polyvinylpyrrolidone, polyurethane, polytetrafluoroethylene, polyvinylidene fluoride, polyethylene, polypropylene, styrene-butadiene rubber, (meth)acrylated styrene-butadiene rubber, an epoxy resin, a (meth)acrylic resin, polyester resin, and/or nylon, but the present disclosure is not limited thereto.

The conductive material is used to provide an electrode with conductivity (e.g., electrical conductivity), and any suitable conductive materials without causing chemical change of a battery (e.g., that do not cause an undesirable chemical change in the rechargeable lithium battery) may be used as the conductive material to constitute the battery. The conductive material may include, for example, a carbon-based material such as natural graphite, artificial graphite, carbon black, acetylene black, Ketjen black, carbon fiber, carbon nano-fiber, and/or carbon nano-tube, a metal-based material including a metal powder and/or metal fiber type (or kind), containing copper, nickel, aluminum, silver and/or the like, a conductive polymer (e.g., an electrically conductive polymer) such as a polyphenylene derivative, or a mixture thereof.

Al may be used as the current collector COL1, but an embodiment of the present disclosure is not limited thereto.

### Positive Electrode Active Material

The positive electrode active material in the positive electrode active material layer AML1 may include a compound (e.g., lithiated intercalation compound) that may reversibly intercalate and de-intercalate lithium. In some embodiments, the positive electrode active material may use at least one type (or kind) of the composite oxide of lithium and metal that is selected from cobalt, manganese, nickel, and a combination thereof.

The composite oxide may include a lithium transition metal composite oxide, for example, a lithium nickel-based oxide, lithium cobalt-based oxide, lithium manganese-based oxide, lithium iron phosphate-based compound, cobalt-free nickel manganese-based oxide, or a combination thereof.

For example, the positive electrode active material may include a compound represented by any one selected from among chemical formulae below. LiₐA_{1-b}X_{b}O_{2-c}D_{c} (0.90≤a≤1.8, 0≤b≤0.5, 0≤c≤0.05), LiₐMn_{2-b}X_{b}O_{4-c}D_{c} (0.90≤a≤1.8, 0≤b≤0.5, 0≤c≤0.05), LiₐNi_{1-b-c}Co_{b}X_{c}O_{2-α}D_{α} (0.90≤a≤1.8, 0≤b≤0.5, 0≤c≤0.5, 0<α<2), LiₐNi_{1-b-c}Mn_{b}X_{c}O_{2-α}D_{α} (0.90≤a≤1.8, 0≤b≤0.5, 0≤c≤0.5, 0<α<2), LiₐNi_{b}Co_{c}L¹_{d}GₑO₂ (0.90≤a≤1.8, 0≤b≤0.9, 0≤c≤0.5, 0≤d≤0.5, 0≤e≤0.1), LiₐNiG_{b}O₂ (0.90≤a≤1.8, 0.001≤b≤0.1), LiₐCoG_{b}O₂ (0.90≤a≤1.8, 0.001≤b≤0.1), LiₐMn_{1-b}G_{b}O₂ (0.90≤a≤1.8, 0.001≤b≤0.1), LiₐMn₂G_{b}O₄ (0.90≤a≤1.8, 0.001≤b≤0.1), LiₐMn_{1-g}G_{g}PO₄ (0.90≤a≤1.8, 0≤g≤0.5), Li_{(3-f)}Fe₂(PO₄)₃ (0≤f≤2), and LiₐFePO₄ (0.90≤a≤1.8).

In the chemical formulae above, A is Ni, Co, Mn, or a combination thereof, X is Al, Ni, Co, Mn, Cr, Fe, Mg, Sr, V, a rare element, or a combination thereof, D is O, F, S, P, or a combination thereof, G is Al, Cr, Mn, Fe, Mg, La, Ce, Sr, V, or a combination thereof, and L¹ is Mn, Al, or a combination thereof.

For example, the positive electrode active material may be a high nickel-based positive electrode active material having the nickel content of about 80 mol% or more, about 85 mol% or more, about 90 mol% or more, about 91 mol% or more, or about 94 mol% or more, and about 99 mol% or less on the basis of about 100 mol% of metals excluding lithium in a lithium transition metal composite oxide. The high nickel-based positive electrode active material may achieve high capacity and thus may be applied to a high-capacity and high-density lithium secondary battery.

### Negative Electrode 20

The negative electrode 20 for a lithium secondary battery may include a current collector COL2, and a negative electrode active material layer AML2 on the current collector COL2. The negative electrode active material layer AML2 may include a negative electrode active material and may further include a binder and/or a conductive material (e.g., an electrically conductive material).

For example, the negative electrode active material layer AML2 may include about 90 wt% to about 99 wt% of the negative electrode active material, about 0.5 wt% to about 5 wt% of the binder, and about 0 wt% to about 5 wt% of the conductive material.

The binder may serve to attach the negative electrode active material particles well to each other and also to attach the negative electrode active material well to the current collector COL2. The binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, poly amideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, fluoro rubber, polyethylene oxide, polyvinylpyrrolidone, polyepichlorohydrine, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and a combination thereof.

If (e.g., when) an aqueous binder is used as the negative electrode binder, a cellulose-based compound capable of imparting or increasing viscosity may be further included. The cellulose-based compound may include at least one selected from among carboxymethyl cellulose, hydroxypropylmethyl cellulose, methyl cellulose, or an alkali metal salt thereof. The alkali metal may include Na, K, and/or Li.

The dry binder may be a polymer material that is capable of being fibrous (e.g., capable of being fiberized). For example, the dry binder may be polytetrafluoroethylene, polyvinylidene fluoride, a polyvinylidene fluoride-hexafluoropropylene copolymer, polyethylene oxide, or a combination thereof.

The conductive material may be used to impart conductivity (e.g., electrical conductivity) to an electrode. Any suitable material that does not cause chemical change (e.g., does not cause an undesirable chemical change in the rechargeable lithium battery) and is an electron conductive material in a battery may be used. Examples of the conductive material may include: a carbon-based material such as natural graphite, artificial graphite, carbon black, acetylene black, Ketjen black, a carbon fiber, a carbon nanofiber, and carbon nanotube; a metal-based material including copper, nickel, aluminum, silver, etc., in a form of a metal powder and/or a metal fiber; a conductive polymer (e.g., an electrically conductive polymer) such as a polyphenylene derivative; or a mixture thereof.

The current collector COL2 may use a copper foil, a nickel foil, a stainless steel foil, a titanium foil, a nickel foam, a copper foam, a polymer substrate coated with a conductive metal, or a combination thereof.

### Negative Electrode Active Material

The negative electrode active material in the negative electrode active material layer AML2 may include a material that reversibly intercalates/deintercalates lithium ions, a lithium metal, a lithium metal alloy, a material capable of doping and de-doping lithium, and/or a transition metal oxide.

The material that reversibly intercalates/deintercalates lithium ions may include a carbon-based negative electrode active material, for example, crystalline carbon, amorphous carbon, or a combination thereof. The crystalline carbon may be graphite such as non-shaped, sheet-shaped, flake-shaped, sphere-shaped, and/or fiber-shaped natural graphite and/or artificial graphite. The amorphous carbon may be soft carbon, hard carbon, a mesophase pitch carbide product, calcined coke, and/or the like.

The lithium metal alloy includes an alloy of lithium with a metal selected from Na, K, Rb, Cs, Fr, Be, Mg, Ca, Sr, Si, Sb, Pb, In, Zn, Ba, Ra, Ge, Al, and Sn.

The material capable of doping into and de-doping from lithium may be a Si-based negative electrode active material and/or a Sn-based negative electrode active material. The Si-based negative electrode active material may include silicon, a silicon-carbon composite, SiOx (0 < x < 2), a Si-Q alloy (where Q is selected from an alkali metal, an alkaline earth metal, a Group 13 element, a Group 14 element (except for Si), a Group 15 element, a Group 16 element, a transition metal, a rare earth element, and a combination thereof), or a combination thereof. The Sn-based negative electrode active material may be Sn, SnO₂, a Sn-based alloy, or a combination thereof.

The silicon-carbon composite may be a composite of silicon and amorphous carbon. According to an embodiment, the silicon-carbon composite may be in a silicon particle form and/or a silicon particle coated with amorphous carbon on the surface thereof. For example, the silicon-carbon composite may include a secondary particle (core), in which primary silicon particles are assembled, and an amorphous carbon coating layer (shell) on the surface of the secondary particle. The amorphous carbon may also be between the primary silicon particles, and, for example, the primary silicon particles may be coated with the amorphous carbon. The secondary particle may be dispersed in an amorphous carbon matrix.

The silicon-carbon composite may further include crystalline carbon. For example, the silicon-carbon composite may include a core including crystalline carbon and silicon particles and an amorphous carbon coating layer on the surface of the core.

The Si-based negative electrode active material and/or the Sn-based negative electrode active material may be used in combination with a carbon-based negative electrode active material.

### Separator 30

Depending on the type (or kind) of the lithium secondary battery, the separator 30 may be present between the positive electrode 10 and the negative electrode 20. The separator 30 may include polyethylene, polypropylene, polyvinylidene fluoride, or a multilayer of two or more thereof, and may also include a mixed multilayer such as a polyethylene/polypropylene two-layer separator, a polyethylene/polypropylene/polyethylene three-layer separator, a polypropylene/polyethylene/polypropylene three-layer separator and/or the like.

The separator 30 may include a porous substrate and a coating layer including an organic material, an inorganic material, or a combination thereof, on one or both surfaces (e.g., two opposing surfaces) of the porous substrate.

The porous substrate may be a polymer film formed of any one polymer selected from polyolefins such as polyethylene and polypropylene, polyesters such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and polytetrafluoroethylene, or a copolymer or mixture of two or more thereof.

The organic material may include a polyvinylidene fluoride-based polymer and/or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but an embodiment of the present disclosure is not limited thereto.

The organic material and the inorganic material may be mixed in one coating layer, or in a stacked form of a coating layer including an organic material and a coating layer including an inorganic material.

### Electrolyte Solution ELL

The electrolyte solution ELL for a lithium secondary battery may include a non-aqueous organic solvent and a lithium salt.

The non-aqueous organic solvent may serve as a medium that transmits ions taking part in the electrochemical reaction of a battery.

The non-aqueous organic solvent may be a carbonate-based, ester-based, ether-based, ketone-based, and/or alcohol-based solvent, an aprotic solvent, or a combination thereof.

The carbonate-based solvent may include dimethyl carbonate (DMC), diethyl carbonate (DEC), dipropyl carbonate (DPC), methyl propyl carbonate (MPC), ethyl propyl carbonate (EPC), methyl ethyl carbonate (MEC), ethylene carbonate (EC), propylene carbonate (PC), butylene carbonate (BC), and/or the like.

The ester-based solvent may include methyl acetate, ethyl acetate, n-propyl acetate, dimethyl acetate, methyl propionate, ethyl propionate, decanolide, mevalonolactone, valerolactone, caprolactone, and/or the like.

The ether-based solvent may include dibutyl ether, tetraglyme, diglyme, dimethoxyethane, 2-methyltetrahydrofuran, 2,5-dimethyltetrahydrofuran, tetrahydrofuran, and/or the like. In some embodiments, the ketone-based solvent may include cyclohexanone, and/or the like. The alcohol-based solvent may include ethyl alcohol, isopropyl alcohol, and/or the like, and the aprotic solvent may include nitriles such as R-CN (wherein R is a C2 to C20 linear, branched, or cyclic hydrocarbon group, and may include a double bond, an aromatic ring, and/or an ether bond); amides such as dimethylformamide; dioxolanes such as 1,3-dioxolane, and/or 1,4-dioxolane; sulfolanes, and/or the like.

The non-aqueous organic solvents may be used alone or in combination of two or more thereof.

In some embodiments, when using a carbonate-based solvent, a cyclic carbonate and a chain carbonate may be mixed and used, and the cyclic carbonate and the chain carbonate may be mixed in a volume ratio of about 1:1 to about 1:9.

The lithium salt dissolved in the organic solvent supplies lithium ions in a battery, enables a basic operation of a lithium secondary battery, and improves the transportation of the lithium ions between the positive electrode and the negative electrode. Examples of the lithium salt may include at least one selected from LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, lithium bis(fluorosulfonyl)imide (Li(FSO₂)₂N, LiFSI), LiC₄F₉SO₃, LiN(CₓF₂ₓ₊₁SO₂)(C_{y}F_{2y+1}SO₂) (where x and y are integers of 1 to 20), lithium trifluoromethane sulfonate, lithium tetrafluoroethanesulfonate, lithium difluoro(oxalato)borate (LiDFOB), lithium difluorobis(oxalato)phosphate (LiDFBOP), and lithium bis(oxalato) borate (LiBOB).

### Lithium secondary battery

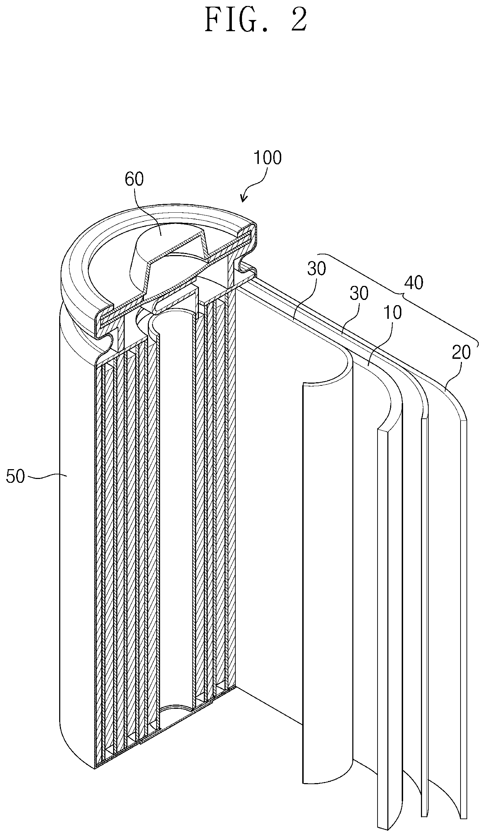

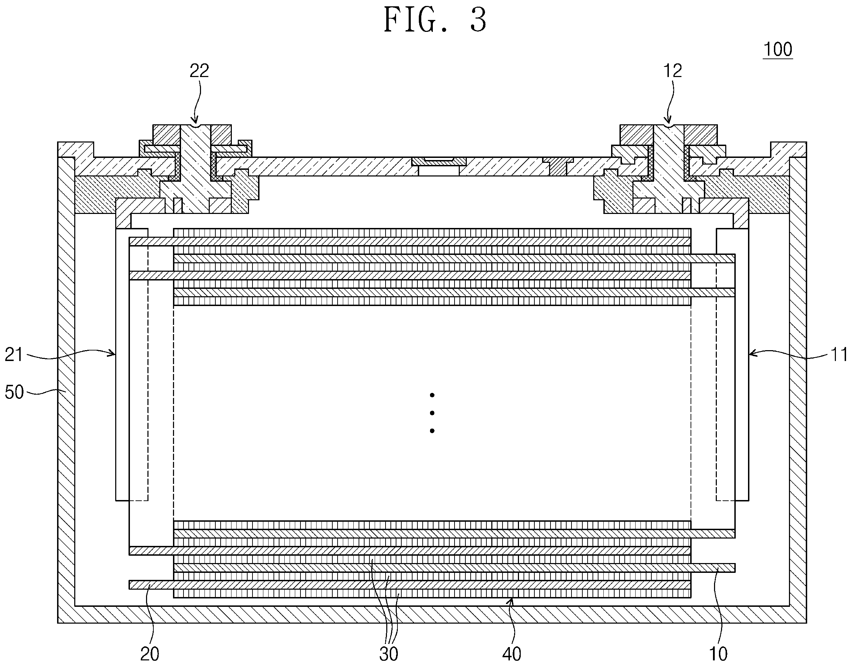

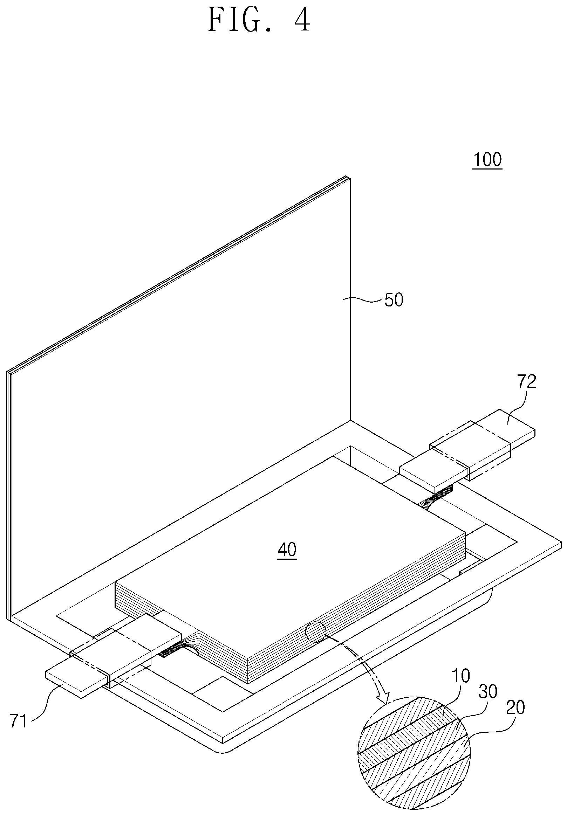

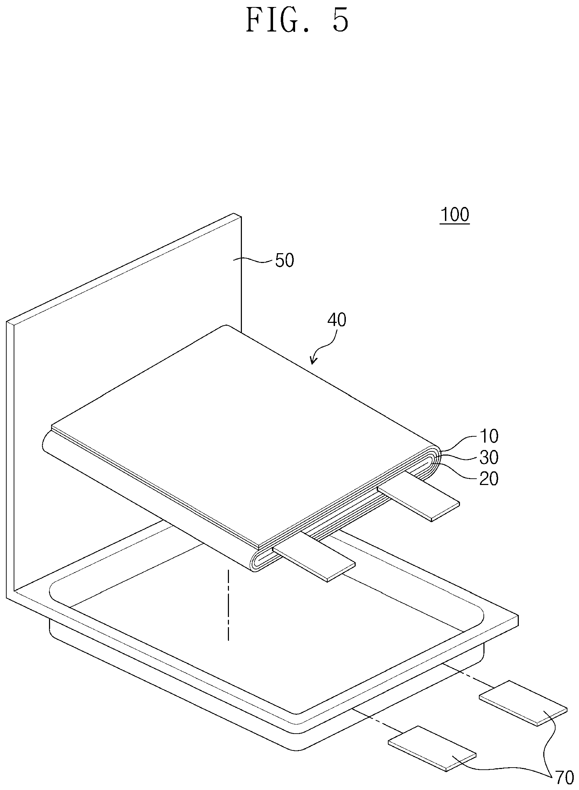

The lithium secondary battery may be classified into cylindrical, prismatic, pouch, or coin-type batteries depending on their shape. FIGS. 2-5 are schematic views illustrating lithium secondary batteries according to some embodiments. FIG. 2 shows a cylindrical battery, FIG. 3 shows a prismatic battery, and FIGS. 4-5 show pouch-type batteries. Referring to FIGS. 2-5, the lithium secondary battery 100 may include an electrode assembly 40 including a separator 30 between a positive electrode 10 and a negative electrode 20, and a case 50 accommodating the electrode assembly 40. The positive electrode 10, the negative electrode 20, and the separator 30 may be immersed in an electrolyte solution. The lithium secondary battery 100 may include a sealing member 60 that seals the case 50, as shown in FIG. 2. In FIG. 3, the lithium secondary battery 100 may include a positive electrode lead tab 11, a positive terminal 12, a negative electrode lead tab 21, and a negative terminal 22. As shown in FIGS. 4-5, the lithium secondary battery 100 may include an electrode tab 70 (FIG. 5), for example, a positive electrode tab 71 and a negative electrode tab 72 (FIG. 4), that serves as an electrical path to induce the current formed in the electrode assembly 40 to the outside.

The lithium secondary battery according to an embodiment of the present disclosure may be applied to automobiles, mobile phones, and/or various suitable types (or kinds) of electric devices, but an embodiment of the present disclosure is not limited thereto.

A negative electrode 20 according to some embodiments of the present disclosure will be further explained herein.

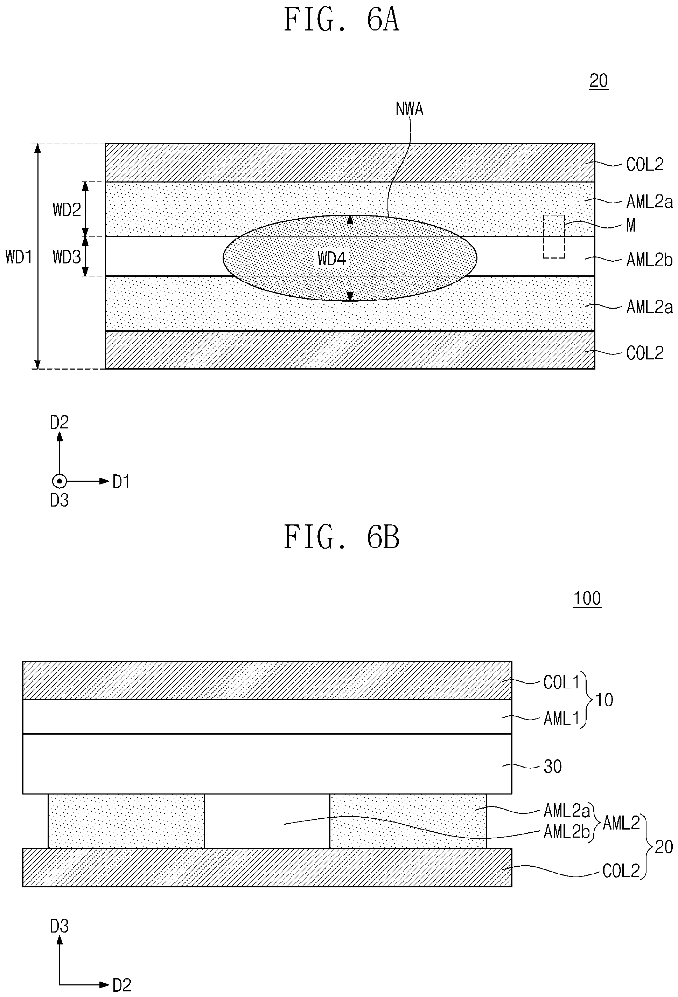

FIG. 6A is a plan view of a negative electrode 20 according to some embodiments of the present disclosure. FIG. 6B is a cross-sectional view of a negative electrode 20 according to some embodiments of the present disclosure.

Referring to FIG. 6A and FIG. 6B, the negative electrode 20 for a lithium secondary battery includes a negative electrode current collector COL2, and a negative electrode active material layer AML2 on the negative electrode current collector COL2. The negative electrode active material layer AML2 may include a negative electrode active material, and may further include a binder and/or a conductive material (e.g., an electrically conductive material).

The negative electrode current collector COL2 may use a copper foil, a nickel foil, a stainless steel foil, a titanium foil, a nickel foam, a copper foam, a polymer substrate coated with a conductive metal, and/or a combination thereof.

### Negative Electrode Active Material Layer AML2

Referring to FIG. 6A and FIG. 6B, the negative electrode active material layer AML2 may include first negative electrode active material layers AML2a and a second negative electrode active material layer AML2b. The negative electrode active material layer AML2 may have a long axis in a first direction D1.

The first negative electrode active material layers AML2a and the second negative electrode active material layer AML2b may be extended in the first direction D1 on the current collector COL2. The first negative electrode active material layers AML2a may be spaced apart from each other in a second direction D2. The second negative electrode active material layer AML2b may be between adjacent first negative electrode active material layers AML2a. The first negative electrode active material layers AML2a may be provided on both sides (e.g., two opposing sides) of the second negative electrode active material layer AML2b in the second direction D2. The height of the first negative electrode active material layer AML2a in a third direction D3 may be substantially the same as the height of the second negative electrode active material layer AML2b in the third direction D3.

The current collector COL2 may have a first width WD1 in the second direction D2. The first negative electrode active material layer AML2a may have a second width WD2 in the second direction D2. The second negative electrode active material layer AML2b may have a third width WD3 in the second direction D2. The first width WD1 may be greater than the sum of the second width WD2 and the third width WD3.

The second width WD2 may be greater than the third width WD3. The ratio of the third width WD3 to the first width WD1 may be about 5% to about 20%. For example, the first width WD1 may be about 60 mm to about 80 mm. The third width WD3 may be about 3 mm to about 15 mm.

The negative electrode active material layer AML2 may have a non-wetted area NWA. The non-wetted area NWA may be an area where the negative electrode active material layer AML2 is not wetted by an electrolyte solution ELL in FIG. 1. Areas other than the non-wetted area NWA may be wetted by the electrolyte solution ELL. A plurality of non-wetted areas NWA may be present. In another embodiment, the non-wetted area NWA may not be formed.

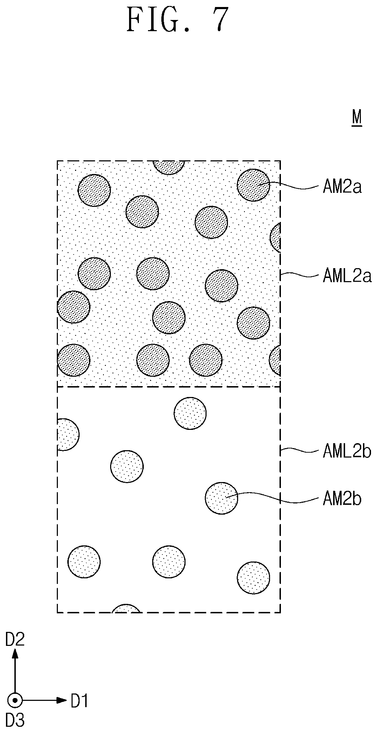

FIG. 7 is an enlarged view of a negative electrode active material layer according to some embodiments of the present disclosure. Referring to FIG. 7, the first negative electrode active material layer AML2a and the second negative electrode active material layer AML2b will be explained in more detail.

The first negative electrode active material layer AML2a and the second negative electrode active material layer AML2b each may include a silicon-carbon composite. The ratio of silicon and carbon in the first negative electrode active material layer AML2a may be different from the ratio of silicon and carbon in the second negative electrode active material layer AML2b. The silicon content in the second negative electrode active material layer AML2b may be greater than the silicon content in the first negative electrode active material layer AML2a. The carbon content in the second negative electrode active material layer AML2b may be smaller than the carbon content in the first negative electrode active material layer AML2a. Accordingly, the specific capacity of the first negative electrode active material layer AML2a and the specific capacity of the second negative electrode active material layer AML2b may be different from each other. For example, the specific capacity of the second negative electrode active material layer AML2b may be greater than the specific capacity of the first negative electrode active material layer AML2a. The ratio of the specific capacity of the first negative electrode active material layer AML2a to the specific capacity of the second negative electrode active material layer AML2b may be about 0.75 to about 0.95.

In an embodiment, the first and second negative electrode active material layers AML2a and AML2b may include at least one selected from among natural graphite, artificial graphite and a combination thereof. The first and second negative electrode active material layers AML2a and AML2b may not include silicon. For example, the first and second negative electrode active material layers AML2a and AML2b may be substantially free from silicon such that if (e.g., when) silicon is present, if at all, it is present only as an incidental impurity. In some embodiments, the first and second negative electrode active material layers AML2a and AML2b may be completely free from silicon.

If (e.g., when) the ratio of the specific capacity of the first negative electrode active material layer AML2a to the specific capacity of the second negative electrode active material layer AML2b is less than 0.75, the appearance of a secondary battery may be poor due to the difference in expansion between the first negative electrode active material layer AML2a and the second negative electrode active material layer AML2b. If (e.g., when) the ratio of the specific capacity of the first negative electrode active material layer AML2a to the specific capacity of the second negative electrode active material layer AML2b is greater than 0.95, the difference in density between the first negative electrode active material layer AML2a and the second negative electrode active material layer AML2b is small, and there may be no improving effect (e.g., improvement) in the non-wetted area NWA, and/or the appearance of the secondary battery may be poor.

The density of the first negative electrode active material layer AML2a and the density of the second negative electrode active material layer AML2b may be different from each other. For example, the density of the first negative electrode active material layer AML2a may be greater than the density of the second negative electrode active material layer AML2b. The porosity of the second negative electrode active material layer AML2b may be greater than the porosity of the first negative electrode active material layer AML2a.

The first negative electrode active material layer AML2a may include a first negative electrode active material AM2a, and the second negative electrode active material layer AML2b may include a second negative electrode active material AM2b. The first and second negative electrode active materials AM2a and AM2b may be the above-explained silicon-carbon composite. The first negative electrode active material AM2a in the first negative electrode active material layer AML2a may be distributed more sparsely than the second negative electrode active material AM2b in the second negative electrode active material layer AML2b.

Because the first negative electrode active material layer AML2a has a smaller specific capacity and a greater density than the second negative electrode active material layer AML2b, the capacity per volume of the first negative electrode active material layer AML2a may be substantially the same as the capacity per volume of the second negative electrode active material layer AML2b. For example, the total capacity of the first negative electrode active material layer AML2a may be the same as the total capacity of the second negative electrode active material layer AML2b.

In the negative electrode 20 according to the present disclosure, the negative electrode active material layer AML2 may include the first negative electrode active material layer AML2a and the second negative electrode active material layer AML2b, having different specific capacities. Because the second negative electrode active material layer AML2b having a large specific capacity (e.g., small density) is included in the central part of the negative electrode 20, the electrolyte solution ELL may penetrate into the central part of the negative electrode 20. Accordingly, the size of the non-wetted area NWA of the negative electrode 20 may be minimized or reduced. By minimizing or reducing the size of the non-wetted area NWA, defects of lithium precipitation and the deterioration of the performance of a lithium secondary battery due to the non-wetted area NWA may be prevented or reduced. As a result, the electrical properties of the secondary battery 100 may be improved.

### Method for Manufacturing Lithium Secondary Battery

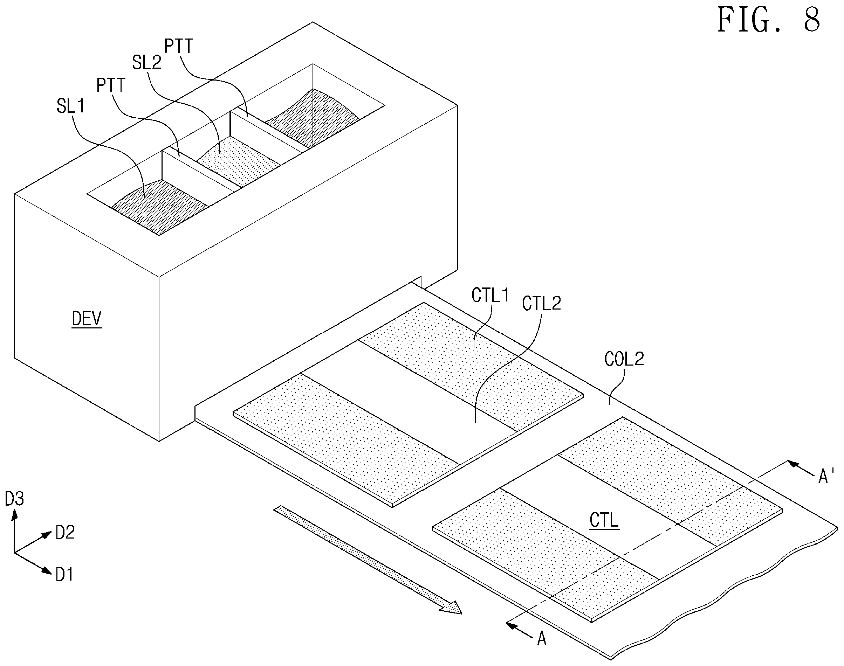

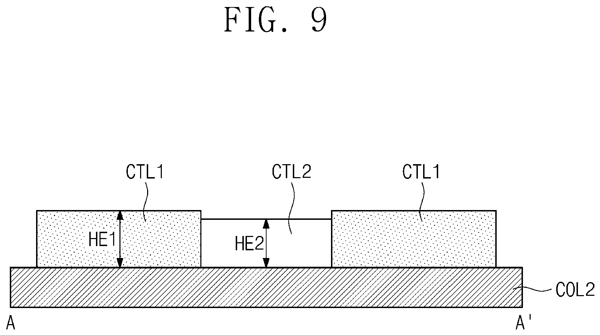

FIG. 8 is a diagram illustrating a method for manufacturing a lithium secondary battery according to an embodiment of the present disclosure. FIG. 9 is a diagram illustrating a method for manufacturing a lithium secondary battery according to an embodiment of the present disclosure and is a cross-sectional view along line A-A' in FIG. 8. Hereinafter, the method for manufacturing a lithium secondary battery according to embodiments of the present disclosure will be explained with reference to FIG. 8 and FIG. 9. Descriptions of technical features that overlap with those described above in FIG. 6A to FIG. 7 may not be repeated here.

The method for manufacturing a lithium secondary battery may include an act of forming a positive electrode, an act of forming a negative electrode, and an act of combining the positive electrode and the negative electrode to from a battery. For example, the act of forming the negative electrode may include an act of preparing a first negative electrode active material slurry SL1 and a second negative electrode active material slurry SL2, and an act of applying the first and second negative electrode active material slurries SL1 and SL2 on a current collector COL2 to respectively form a first and second negative electrode active material layers AML2a and ALM2b.

The preparation of the first negative electrode active material slurry SL1 may include mixing the first negative electrode active material AM2a, a binder and a conductive material (e.g., an electrically conductive material). The preparation of the second negative electrode active material slurry SL2 may include mixing the second negative electrode active material AM2b, a binder and a conductive material (e.g., an electrically conductive material). The first negative electrode active material AM2a and the second negative electrode active material AM2b may be the above-explained silicon-carbon composite. The ratio of silicon and carbon in the first negative electrode active material slurry SL1 and the ratio of silicon and carbon in the second negative electrode active material slurry SL2 may be different from each other. Accordingly, the specific capacity of the first negative electrode active material slurry SL1 and the specific capacity of the second negative electrode active material slurry SL2 may be different from each other. For example, the specific capacity of the second negative electrode active material slurry SL2 may be greater than the specific capacity of the first negative electrode active material slurry SL1.

Referring to FIG. 8, the first and second negative electrode active material slurries SL1 and SL2 may be applied on the current collector COL2 using a slurry coating device DEV. The first negative electrode active material slurry SL1 and the second negative electrode active material slurry SL2 may be provided in internal spaces of the slurry coating device DEV. The first negative electrode active material slurry SL1 and the second electrode negative electrode active material slurry SL2 may be separated from each other in the second direction D2 with a partition PTT therebetween. The first negative electrode active material slurry SL1 and the second negative electrode active material slurry SL2 may not be mixed by the partition PTT. In the slurry coating device DEV, the second negative electrode active material slurry SL2 may be provided between a plurality of first negative electrode active material slurries SL1. Accordingly, a plurality of partitions PTT may be utilized.

A current collector COL2 may pass under the slurry coating device DEV. The slurry coating device DEV may apply the first and second negative electrode active material slurries SL1 and SL2 onto the current collector COL2 through nozzles. The first and second negative electrode active material slurries SL1 and SL2 may be applied in parallel (e.g., substantially in parallel) along a first direction D1. The first and second negative electrode active material slurries SL1 and SL2 may be in a fluid state.

Referring to FIGS. 8-9, on the current collector COL2, the first negative electrode active material slurry SL1 may be applied to form first negative electrode coating layers CTL1, and the second negative electrode active material slurry SL2 may be applied to form a second negative electrode coating layer CTL2. The first negative electrode coating layers CTL1 may be spaced apart from each other in the second direction D2, with the second negative electrode coating layer CTL2 therebetween. The height HE1 of the first negative electrode coating layer CTL1 in the third direction D3 may be greater than the height HE2 of the second negative electrode coating layer CTL2 in the third direction D3. The level of the top of the first negative electrode coating layer CTL1 may be higher than the level of the top of the second negative electrode coating layer CTL2.

Referring to FIG. 6B again, a drying process and a rolling process may be performed on the first and second negative electrode coating layers CTL1 and CTL2. By the drying process and the rolling process, the height HE1 of the first negative electrode coating layer CTL1 may be made substantially the same as the height HE2 of the second negative electrode coating layer CTL2.

Hereinafter, embodiments of the present disclosure will be explained in more detail through examples. However, the examples are for illustrating embodiments of the present disclosure, and the scope of the present disclosure is not limited to the examples.

### Example 1

A first negative electrode active material slurry and a second negative electrode active material slurry were prepared. The second negative electrode active material slurry was prepared to have higher silicon content than the first negative electrode active material slurry. The first and second negative electrode active material slurries were applied on a negative electrode current collector, and a drying process was performed to form first and second negative electrode active material layers. The width of the negative electrode current collector in the second direction D2 was 66 mm. The width of the second negative electrode active material layer in the second direction D2 was 3.3 mm.

The specific capacity of the first negative electrode active material layer was 470 mAh/g, and the specific capacity of the second negative electrode active material layer was 588 mAh/g. The ratio of the specific capacity of the first negative electrode active material layer to the specific capacity of the second negative electrode active material layer was 0.8. The density of the fist negative electrode active material layer was 1.70 g/cc, and the density of the second negative electrode active material layer was 1.36 g/cc. The porosity of the first negative electrode active material layer was 18.5%, and the porosity of the second negative electrode active material layer was 27.9%.

The negative electrode thus formed, a separator and a positive electrode were combined. Using an electrolyte solution, a lithium secondary battery was fabricated.

### Example 2

A lithium secondary battery was prepared by substantially the same method as described in Example 1 except that the width of the second negative electrode active material layer in the second direction D2 was 13 mm.

### Example 3

A lithium secondary battery was prepared by substantially the same method as described in Example 1 except that the specific capacity of the second negative electrode active material layer was 495 mAh/g, the ratio of the specific capacity of the first negative electrode active material layer to the specific capacity of the second negative electrode active material layer was 0.95, the density of the second negative electrode active material layer was 1.62 g/cc, the porosity of the first negative electrode active material layer was 17.9%, and the porosity of the second negative electrode active material layer was 20.5%.

### Example 4

A lithium secondary battery was prepared by substantially the same method as described in Example 1 except that the specific capacity of the second negative electrode active material layer was 495 mAh/g, the ratio of the specific capacity of the first negative electrode active material layer to the specific capacity of the second negative electrode active material layer was 0.95, the density of the second negative electrode active material layer was 1.62 g/cc, the porosity of the first negative electrode active material layer was 17.7%, the porosity of the second negative electrode active material layer was 20.9%, and the width of the second negative electrode active material layer in the second direction D2 was 13 mm.

### Comparative Example 1

A lithium secondary battery was prepared by substantially the same method as described in Example 1 except that the negative electrode active material layer was formed by using only the first negative electrode active material slurry, while omitting the second negative electrode active material layer.

### Comparative Example 2

A lithium secondary battery was prepared by substantially the same method as described in Example 1 except that the specific capacity of the second negative electrode active material layer was 671 mAh/g, the ratio of the specific capacity of the first negative electrode active material layer to the specific capacity of the second negative electrode active material layer was 0.7, the density of the second negative electrode active material layer was 1.19 g/cc, the porosity of the second negative electrode active material layer was 32.8%, and the width of the second negative electrode active material layer in the second direction D2 was 13 mm.

### Comparative Example 3

A lithium secondary battery was prepared by substantially the same method as described in Example 1 except that the porosity of the first negative electrode active material layer was 18.7%, the porosity of the second negative electrode active material layer was 28.6%, and the width of the second negative electrode active material layer in the second direction D2 was 2 mm.

### Comparative Example 4

A lithium secondary battery was prepared by substantially the same method as described in Example 1 except that the porosity of the first negative electrode active material layer was 17.7%, the porosity of the second negative electrode active material layer was 27.7%, and the width of the second negative electrode active material layer in the second direction D2 was 16.5 mm.

### Comparative Example 5

A lithium secondary battery was prepared by substantially the same method as described in Example 1 except that the specific capacity of the second negative electrode active material layer was 495 mAh/g, the ratio of the specific capacity of the first negative electrode active material layer to the specific capacity of the second negative electrode active material layer was 0.95, the density of the second negative electrode active material layer was 1.62 g/cc, the porosity of the first electrode active material layer was 17.3%, the porosity of the second negative electrode active material layer was 20.8%, and the width of the second negative electrode active material layer in the second direction D2 was 16.5 mm.

A comparison of the negative electrode active material layers according to Examples 1 to 4 and Comparative Examples 1 to 5 is shown in Table 1 below.

**Table 1**

| | First negative electrode active material layer | | | Second negative electrode active material layer | | | | X/Y | Z/cu rren t coll ecto r widt h |
|---|---|---|---|---|---|---|---|---|---|
| | Specifi c capacit y (X) [mAh/g ] | Den sity [g/c c] | Por osit y [%] | Specifi c capacit y (Y) [mAh/g ] | Den sity [g/cc ] | Por osit y [%] | Widt h (Z) [mm ] | | |
| Example 1 | 470 | 1.70 | 18.5 | 588 | 1.36 | 27.9 | 3.3 | 0.8 | 5% |
| Example 2 | | | 18.6 | 588 | 1.36 | 27.9 | 13.0 | 0.8 | 20% |
| Example 3 | | | 17.9 | 495 | 1.62 | 20.5 | 3.3 | 0.95 | 5% |
| Example 4 | | | 17.7 | 495 | 1.62 | 20.9 | 13.0 | 0.95 | 20% |
| Comparat ive Example 1 | | | 18.0 | 470 | 1.70 | 18.5 | 0.0 | 1.0 | 0% |
| Comparat ive Example 2 | | | 18.5 | 671 | 1.19 | 32.8 | 13.0 | 0.7 | 20% |
| Comparat ive Example 3 | | | 18.7 | 588 | 1.36 | 28.6 | 2.0 | 0.8 | 3% |
| Comparat ive Example 4 | | | 17.7 | 588 | 1.36 | 27.7 | 16.5 | 0.8 | 25% |
| Comparat ive Example 5 | | | 17.3 | 495 | 1.62 | 20.8 | 16.5 | 0.95 | 25% |

### Experimental Example 1: Analysis on Non-wetted Area Width and Cell Appearance Defects

The widths of the non-wetted areas and the presence or not of the cell appearance defects of the negative electrodes according to Examples 1 to 4 and Comparative Examples 1 to 5 were analyzed. The results are shown in Table 2.

**Table 2**

| | X/Y | Second negative electrode active material layer width (Z) [mm] | Non-wetted area width (A) [mm] | A/current collector width | Cell appearance defects |
|---|---|---|---|---|---|
| Example 1 | 0.8 | 3.3 | 10 | 15.2% | Absence |
| Example 2 | 0.8 | 13.0 | 9 | 13.6% | Absence |
| Example 3 | 0.95 | 3.3 | 19 | 28.8% | Absence |
| Example 4 | 0.95 | 13.0 | 15 | 22.7% | Absence |
| Comparat ive Example 1 | 1.0 | 0.0 | 24 | 36.4% | Absence |
| Comparat ive Example 2 | 0.7 | 13.0 | 7 | 10.6% | Presence |
| Comparat ive Example 3 | 0.8 | 2.0 | 23 | 34.8% | Absence |
| Comparat ive Example 4 | 0.8 | 16.5 | 10 | 15.2% | Presence |
| Comparat ive Example 5 | 0.95 | 16.5 | 16 | 24.2% | Presence |

Referring to Table 2, according to Example 1 and Example 2, it was confirmed that if (e.g., when) the ratio (X/Y) of the specific capacity of the first negative electrode active material layer to the specific capacity of the second negative electrode active material layer is about 0.8, the width (A) of the non-wetted area decreased irrespective of the width (Z) of the second negative electrode active material layer. According to Example 3 and Example 4, it was confirmed that if (e.g., when) the ratio (X/Y) of the specific capacity of the first negative electrode active material layer to the specific capacity of the second negative electrode active material layer is about 0.95, the width (A) of the non-wetted area decreased with the increase of the width (Z) of the second negative electrode active material layer.

According to Comparative Example 1, the second negative electrode active material layer was omitted, and the width (A) of the non-wetted area was about 24 mm and was formed wider than the Examples. According to Comparative Example 2, the width (A) of the non-wetted area decreased, but cell appearance defect was found. Accordingly, it was confirmed that if (e.g., when) the ratio (X/Y) of the specific capacity of the first negative electrode active material layer to the specific capacity of the second negative electrode active material layer is less than about 0.75, cell appearance defect was generated due to the expansion of the second negative electrode active material layer.

According to Comparative Example 3, the width (A) of the non-wetted area was about 23 mm and was formed wider than the Examples. Accordingly, it was confirmed that if (e.g., when) the width of the second negative electrode active material layer is less than about 3 mm, the reducing effect of the non-wetted area was small. According to Comparative Example 4 and Comparative Example 5, cell appearance defects were found. Accordingly, it was confirmed that if (e.g., when) the width of the second negative electrode active material layer is greater than about 15 mm, cell appearance defect was generated.

Referring to the Examples and Comparative Examples, if (e.g., when) the ratio (X/Y) of the specific capacity of the first negative electrode active material layer to the specific capacity of the second negative electrode active material layer satisfies a range between about 0.75 and about 0.95, and the width (Z) of the second negative electrode active material layer satisfies a range between about 3 mm and about 15 mm, it was confirmed that the reducing effect in the non-wetted area of the negative electrode was achieved.

A negative electrode according to an embodiment of the present disclosure and a lithium secondary battery including the same may have excellent capacity, efficiency, energy density and lifespan. In some embodiments, according to an embodiment of the present disclosure, by including a negative electrode active material layer having relatively low density in the central part of the negative electrode, an electrolyte solution may penetrate to the central part of the negative electrode. Accordingly, a non-wetted area of the negative electrode may be minimized or reduced. As a result, the electrical characteristics of the secondary battery may be improved.

Although embodiments of the present disclosure have been described, it is understood that the present disclosure should not be limited to these embodiments but various suitable changes and modifications can be made by one ordinary skilled in the art within the spirit and scope of the present disclosure as hereinafter claimed.

## Claims

1. A negative electrode (20) for a lithium secondary battery (100), the negative electrode (20) comprising:
a negative electrode current collector (COL2) and a negative electrode active material layer (AML2) on the negative electrode current collector (COL2), the negative electrode active material layer (AML2) having a long axis in a first direction,
wherein the negative electrode active material layer (AML2) comprises:
first negative electrode active material layers (AML2a) spaced apart from each other in a second direction that crosses the first direction; and
a second negative electrode active material layer (AML2b) between respective ones of the first negative electrode active material layers (AML2a), and
a ratio of a specific capacity of the first negative electrode active material layers (AML2a) to a specific capacity of the second negative electrode active material layer (AML2b) is 0.75 to 0.95.

2. The negative electrode (20) for a lithium secondary battery (100) as claimed in claim 1, wherein a width of the second negative electrode active material layer (AML2b) in the second direction is 3 mm to 15 mm.

3. The negative electrode (20) for a lithium secondary battery (100) as claimed in claim 1 or 2, wherein a width of the first negative electrode active material layer (AML2a) in the second direction is greater than a width of the second negative electrode active material layer (AML2b) in the second direction.

4. The negative electrode (20) for a lithium secondary battery (100) as claimed in any one of claims 1 to 3, wherein the silicon content in the second negative electrode active material layer (AML2b) is greater than the silicon content in the first negative electrode active material layer (AML2a).

5. The negative electrode (20) for a lithium secondary battery (100) as claimed in any one of claims 1 to 4, wherein a porosity of the second negative electrode active material layer (AML2b) is greater than a porosity of the first negative electrode active material layer (AML2a).

6. The negative electrode (20) for a lithium secondary battery (100) as claimed in any one of claims 1 to 5, wherein a density of the first negative electrode active material layer (AML2a) is greater than a density of the second negative electrode active material layer (AML2b).

7. The negative electrode (20) for a lithium secondary battery (100) as claimed in any one of claims 1 to 6,
wherein the first and second negative electrode active material layers (AML2a, AML2b) each comprise a silicon-carbon composite, and
a ratio of silicon to carbon in the first negative electrode active material layer (AML2a)s is different from a ratio of silicon to carbon in the second negative electrode active material layer (AML2b).

8. The negative electrode (20) for a lithium secondary battery (100) as claimed in any one of claims 1 to 7, wherein a ratio of a width of the second negative electrode active material layer (AML2b) in the second direction to a width of the negative electrode current collector (COL2) in the second direction is 5% to 20%.

9. A lithium secondary battery (100) comprising:
a positive electrode (10) comprising a current collector and a positive electrode active material layer on the current collector;
a negative electrode (20) comprising a negative electrode current collector (COL2) and a negative electrode active material layer (AML2) on the negative electrode current collector (COL2), the negative electrode active material layer (AML2) having a long axis in a first direction; and
a separator (30) between the positive electrode (10) and the negative electrode (20),
wherein the negative electrode active material layer (AML2) comprises:
first negative electrode active material layers (AML2a) spaced apart from each other in a second direction that crosses the first direction; and
a second negative electrode active material layer (AML2b) between respective ones of the first negative electrode active material layers (AML2a),
a ratio of a specific capacity of the second negative electrode active material layer (AML2b) is greater than a specific capacity of the first negative electrode active material layer (AML2a), and
a ratio of a width of the second negative electrode active material layer (AML2b) in the second direction to a width of the negative electrode current collector (COL2) in the second direction is 5% to 20%.

10. The lithium secondary battery (100) as claimed in claim 9, wherein a ratio of a specific capacity of the first negative electrode active material layer (AML2a) to a specific capacity of the second negative electrode active material layer (AML2b) is 0.75 to 0.95.

11. The lithium secondary battery (100) as claimed in claim 9 or 10, wherein a porosity of the second negative electrode active material layer (AML2b) is greater than a porosity of the first negative electrode active material layer (AML2a).

12. The lithium secondary battery (100) as claimed in any one of claims 9 to 11, wherein a density of the first negative electrode active material layer (AML2a) is greater than a density of the second negative electrode active material layer (AML2b).

13. The lithium secondary battery (100) as claimed in any one of claims 9 to 12, wherein a ratio of a width of the second negative electrode active material layer (AML2b) in the second direction to a width of the negative electrode current collector (COL2) in the second direction is 5% to 20%.

14. A method for manufacturing a lithium secondary battery (100), the method comprising:
preparing a first negative electrode active material slurry and a second negative electrode active material slurry; and
applying the first negative electrode active material slurry and the second negative electrode active material slurry side by side along a first direction onto a negative electrode current collector (COL2) to form a first negative electrode active material layer (AML2a) and a second negative electrode active material layer (AML2b), respectively,
wherein a ratio of a specific capacity of the first negative electrode active material layer (AML2a) to a specific capacity of the second negative electrode active material layer (AML2b) is 0.75 to 0.95.

15. The method for manufacturing a lithium secondary battery (100) as claimed in claim 14,
wherein the first and second negative electrode active material slurries each comprise a silicon-carbon composite, and
a ratio of silicon to carbon in the first negative electrode active material slurry is different from a ratio of silicon to carbon in the second negative electrode active material slurry.
